# EUROPÄISCHE PATENTSCHRIFT

(11) **EP 1 188 472 B1**
(45) Veröffentlichungstag und Bekanntmachung des Hinweises auf die Patenterteilung: **29.11.2006**
(21) Anmeldenummer: 01120696.8
(22) Anmeldetag: 04.09.2001
(51) Int. Cl.: B01D 53/14, B01D 53/50, B01J 20/34

(54) **Verfahren sowie Einrichtung zur Reinigung von Schwefeldioxid enthaltenden Rauchgasen**
Process and apparatus for purifying sulphur dioxide containing gases
Procédé et dispositif pour la purification de gaz contenants du dioxyde de soufre

(30) Priorität: 15.09.2000 DE 10045586
(43) Veröffentlichungstag der Anmeldung: 20.03.2002
(73) Patentinhaber: ALSTOM Power Boiler GmbH, 70329 Stuttgart (DE)
(72) Erfinder: Morin, Jean Xavier, 45170 Neuville aux Bois (FR); Seeber, Joachim, 73249 Wernau (DE)

(56) Entgegenhaltungen:
- WO-A-01/32296
- WO-A-99/56868
- GB-A- 2 107 207
- US-A- 4 312 280
- US-A- 5 345 884
- US-A- 5 551 357

## Beschreibung

Die Erfindung betrifft ein Verfahren sowie eine Einrichtung zur Reinigung von Schwefeldioxid enthaltenden Rauchgasen aus zirkulierenden Wirbelschichtfeuerungsanlagen.

Zirkulierende Wirbelschichtfeuerungsanlagen werden insbesondere zur emissionsarmen Verbrennung fossiler Brennstoffe, z.B. Kohle. Torf, Holz usw. eingesetzt. Bei Verfeuerung von beispielsweise schwefelhaltiger Kohle entsteht durch die Oxidation des Schwefels Schwefeldioxid, das durch das Rauchgas in die Atmosphäre gelangt. Diese für die Erdatmosphäre schädlichen Emissionen werden durch den Wetterkreislauf als saurer Regen wieder auf die Erde zurückgeführt. Zur weitestgehenden Reduzierung dieser schädlichen Emissionen sind verschiedene Verfahren entwickelt worden.

Eine Übersicht über die Einbindung von Schwefeldioxid in Wirbelschichtfeuerungsanlagen wurde von E.J. Anthony während des "Mediterranean Combustion Symposium" in Antalya, Türkei im Juni 1999 präsentiert.

Bekannt ist beispielsweise die Zugabe eines feinkörnigen alkalischen SO₂-Sorptionsmittels, im allgemeinen Kalkstein ( CaCO₃ ), gebrannter Kalk ( CaO ) oder auch Dolomit, in die Brennkammer der Wirbelschichtfeuerungsanlage. Dabei erfolgt zunächst der Brennprozess (Calzinierprozess) des Kalksteins zu gebranntem Kalk ( CaO ) und anschließend eine Reaktion des gebrannten Kalksteins mit dem Schwefeldioxid des Rauchgases.

Wird dabei der Kalkstein den in einer zirkulierenden Wirbelschichtfeuerungsanlage vorliegenden Temperaturen von 700°C bis 950°C ausgesetzt, d.h. wird Kohlendioxid aus dem Kalkstein ausgetrieben, so bleibt gebrannter Kalk zurück, der aufgrund des Austreibens des CO₂ eine hohe Porosität und somit eine hohe spezifische Oberfläche besitzt.

Die nachfolgende Gas-Feststoff-Reaktion des gebrannten Kalks ( Sorptionsmittels ) mit Schwefeldioxid und Sauerstoff ist eine Oberflächenreaktion, weshalb die Erzeugung einer hohen spezifischen Oberfläche eine Grundvoraussetzung für diese Reaktion ist. Als festes Reaktionsprodukt bleibt Kalziumsulfat bzw. Gips ( CaSO₄) zurück, der in den Poren bzw. auf der Oberfläche des Sorptionsmittels bzw. des gebrannten Kalkes verbleibt.

Je nach der Korngröße des eingesetzten Kalksteins bzw. SO₂-Sorptionsmittels und dessen Abriebeigenschaften verbleibt das Sorptionsmittel-Reaktionsprodukt-Korn (Kalk-Gips-Korn) entweder solange in der Brennkammer, bis es über die Aggregate der Brennkammerentaschung abgezogen wird, oder das Sorptionsmittel-Reaktionsprodukt-Korn verläßt im Fall, das es sich um ein kleines Partikel handelt, die Brennkammer zusammen mit dem Rauchgasstrom und wird anschließend im nachgeschalteten Rauchgasfilter abgeschieden.

Bei dem Gemisch aus Brennstoffasche, Reaktionssprodukt und freiem, nicht reagiertem Sorptionsmittel, das über die Brennkammerentaschung abgezogen wird spricht man gemeinhin von Boden- oder Grobasche. Die Partikelgröße dieser Grobasche ist im wesentlichen größer 100 µm. Die Maximalkorndurchmesser können mehrere mm betragen.

Die mit dem Rauchgas ausgetragene Asche, die nachfolgend im Filter abgeschieden wird, wird im allgemeinen als Filterasche bezeichnet. Ihre Korngröße umfaßt je nach Güte des Zyklons / Abscheiders die kleinen Kornfraktionen bis ca. 200µm Durchmesser.

Die Erfahrung aus ausgeführten zirkulierenden Wirbelschichtfeuerungsanlagen zeigt, daß für die im industriellen Einsatz geforderten Entschwefelungsgrade, d.h. Reduzierung von Schwefeldioxid, von 70% bis 99% die Entschwefelungsreaktion einen hohen Überschuß an Sorptionsmittel benötigt. Der Bedarf ist um so höher, je höher der Entschwefelungsgrad gefordert wird.

Benutzt man als Maß für den zugegebenen Kalkstein bzw. eines anderen Sorptionsmittels das Ca/S-Verhältnis, also den molaren Quotienten von extern zugeführtem Ca und dem insgesamt vorhandenem Schwefel des Brennstoffes, so liegen typische Ca/S-Werte für Wirbelschichtfeuerungsanlagen zwischen 2 und 4 für Entschwefelungsgrade von 95%.

Diese Erfordernis hat insbesondere ökonomische Nachteile, da im allgemeinen hierdurch sowohl die Betriebskosten zur Beschaffung von Kalkstein bzw. eines anderen Sorptionsmittels erhöht werden als auch die Entsorgungskosten für die anfallende Asche durch den Anteil des nicht reagierten Sorptionsmittels erhöht werden.

Bei dem vorgenannten Entschwefelungsverfahren des Rauchgases in einer zirkulierenden Wirbelschichtfeuerungsanlage hat sich nachteilig gezeigt, daß der Kalkstein bzw. das SO₂-Sorptionsmittel nicht vollständig mit dem Schwefeldioxid reagiert, da sich häufig ein nahezu gasundurchlässiger Gipsmantel um das Kalkkorn bzw. Sorptionsmittelkorn bildet sowie die Poren des Kalkes bzw. Sorptionsmittels durch das Reaktionsprodukt Gips verstopft werden. Physikalisch/chemisch ist dies durch das größere Molvolumen des in das Kalkkorn bzw. Sorptionsmittelkorn diffundierenden SO₂ gegenüber dem ausgetriebenen CO₂ begründet.

Insbesondere im Inneren der Sorptionsmittel-Reaktionsprodukt-Körner (Kalk-Gips-Körner) verbleibt ein Kern aus nicht reagiertem Sorptionsmittel, der für die Reaktion nicht mehr zur Verfügung steht, da die Reaktionspartner Schwefeldioxid und Sauerstoff nicht mehr bis in den Kern vordringen können.

Die Gehalte an nicht reagiertem freien Sorptionsmittel im Aschegemisch können sowohl bei Filterasche als auch bei Grobasche bis 40%, bezogen auf das gesamte auszutragende Aschegemisch, betragen. Auch im Rahmen der weiteren Verwendung des Aschegemisches in der Zementindustrie oder im Straßenbau ist eine Absenkung des Gehaltes an freiem, d.h. nicht reagiertem Sorptionsmittel bzw. Kalkstein auf unter 3 bis 5% erstrebenswert.

In vorhandenen Wirbelschichtfeuerungsanlagen werden derzeit unterschiedliche Techniken eingesetzt, um den Nutzungsgrad von Sorptionsmitteln bzw. Kalkstein zur Reduzierung des Schwefeldioxides zu erhöhen.

So wird beispielsweise in zirkulierenden Wirbelschichtfeuerungsanlagen die im Rauchgasfilter anfallende Asche, die noch hohe Anteile nicht reagierten Sorptionsmittels enthalten kann, wieder direkt in die Brennkammer zurückgeführt.

Nachteilig an dieser Ascherückführung ist, daß die Ausnutzung des noch freien Sorptionsmittels in der Asche nur begrenzt genutzt werden kann, weil die zusätzliche Verweilzeit in der Wirbelschichtbrennkammer niedrig ist und weil die Reaktivität dieser Asche bzw. des in der Asche enthaltenen freien Sorptionsmittel im Vergleich zum ursprünglichen Sorptionsmittel deutlich verringert ist.

Daneben ist auch eine Rückführung der aus der Brennkammer abgezogenen Bettasche üblich. Hierzu wird die Bettasche zum Teil einer Behandlung ( Absiebung der günstigen Kornfraktion oder Aufmahlung der Bettasche ) unterzogen, um den Reaktionsgrad zu erhöhen. Aber auch diese Methode hat den Nachteil, daß ihr Effekt zur Reduzierung des Sorptionsmittelverbrauches sehr begrenzt ist, da die Ursache der unvollständigen Reaktion, der vorerwähnte Gipsmantel um das Sorptionsmittel- bzw. Kalkkorn, nicht beseitigt wird.

Durch Druckschrift US Patent 4,312,280, Shearer et. Al, ist ferner ein System bekannt geworden, bei dem Asche aus stationären Wirbelschichtfeuerungsanlagen mit Wasser bzw. Dampf in Kontakt gebracht wird und in die Brennkammer der Wirbelschichtanlage zurückgeführt wird. Die Mischung der Asche mit Dampf und Wasser erfolgt in einem komplexen Wirbelschichtreaktor bei höheren Temperaturen. Tiefergehende verfahrenstechnische Details über Betriebstemperaturen dieses Wirbelschichtreaktors und mit welchen Wasserzumischungen gearbeitet wird, sind nicht erwähnt. Dieses bekannt gewordene System weist insgesamt eine hohe technische Komplexität auf und hat sich daher am Markt nicht durchgesetzt, auch weil die Verbreitung von stationären Wirbelschichtfeuerungsanlagen auf kleine Anlagengrößen begrenzt ist und gegenüber zirkulierenden Wirbelschichtfeuerungsanlagen den Nachteil geringerer Partikelverweilzeit sowie inhomogenerer Temperaturverteilung besitzt.

Durch die Druckschrift US PS 5,345,884 wird eine zirkulierende Wirbelschichtfeuerung offenbart, deren Schwefeloxid enthaltende Verbrennungsabgase bzw. Rauchgase in einem Zyklon entstaubt, in einen mit Heizflächen versehenen Kessel geführt und anschließend einem Entschwefelungsreaktor zugeführt werden. In diesem wird mittels des in der Brennkammer zugegebenen Entschwefelungsagenten das Rauchgas in halb-feuchter Weise entschwefelt. Anschließend werden die Entschwefelungsprodukte bzw. Residue, beinhaltend Flugasche, Kalziumsulfite CaCO₃ sowie Kalziumsulfate CaCO₄ am Boden eines Staubfilters gesammelt und anschließend bei mehr als 400° C in einem Reaktor thermisch oxidiert, wobei CaCO₃ zu CaCO₄ umgewandelt wird. Dies geschieht durch Zumischung von über 850° C heißen Feststoffen bzw. Solids aus der Wirbelschichtfeuerung.

Durch die Druckschrift US PS 5,551,357 wird eine zirkulierende Wirbelschichtfeuerung offenbart, bei der aus dem Boden der Brennkammer Verbrennungsrückstände bzw. Bodenasche entfernt, anschließend bei einer Reaktionstemperatur von mehr als 103° C mit Wasserdampf kontaktiert, in einen hydrierten Sorptionsanteil und Nichtsorptionsanteil klassifiziert und der hydrierte Sorptionsanteil in die Brennkammer zurückgeführt wird. Die Hydrierung findet dabei in einem fluidisierten Hydrator statt.

Aufgabe der Erfindung ist es nun, ein Verfahren sowie eine Einrichtung zur Reinigung von Schwefeldioxid enthaltenden Rauchgasen aus zirkulierenden Wirbelschichtfeuerungsanlagen zu schaffen, bei der die vorgenannten Nachteile vermieden werden. Ferner soll die Effizienz bzw. der Nutzungsgrad des eingesetzten Sorptionsmittels erhöht werden und dadurch die zur Sorption des Schwefeldioxides benötigte Sorptionsmittelmenge verringert werden.

Die vorstehend genannte Aufgabe wird durch ein Verfahren mit den Merkmalen des Patentanspruches 1 und durch eine Einrichtung mit den Merkmalen des Anspruches 23 gelöst.

Weitere vorteilhafte Ausgestaltungen der Erfindung sind den Unteransprüchen zu entnehmen.

Durch die erfindungsgemäße Lösung wird ein Verfahren sowie eine Vorrichtung geschaffen, das bzw. die die nachfolgenden Vorteile aufweist.

Durch die Anmischung des aus der Brennkammer der zirkulierenden Wirbelschichtfeuerungsanlage kommenden Aschegemisches (Asche, Reaktionsprodukt und nicht reagiertes SO₂-Sorptionsmittel) mit Wasser oder einer wässrigen, natriumhaltigen Lösung in einer mechanischen Mischeinrichtung bei einer Reaktionstemperatur von 60° bis 100 °C und bei atmosphärischem Druck und dessen Rückführung in die Brennkammer der zirkulierenden Wirbelschichtfeuerungsanlage wird der Ausnutzungsgrad des Sorptionsmittels gegenüber einer einfachen Rückführung von Filterasche oder Bodenasche deutlich erhöht.

Dieser Effekt ergibt sich dadurch, daß durch die Anmischung der Asche mit Wasser oder einer wässrigen, natriumhaltigen Lösung entsprechend dem erfindungsgemäßen Verfahren das noch unreagierte Sorptionsmittel bei der Reaktionstemperatur von 60 bis 100 °C zunächst mit Wasser oder einer wässrigen, natriumhaltigen Lösung zu einem Hydrationsprodukt reagiert. Diese Reaktion ist exotherm. Die Temperaturerhöhung sowie die Reaktionsgeschwindigkeit hängen vom Gehalt des nicht reagierten Sorptionsmittels in der Asche, der Temperatur der zugeführten Asche und der Temperatur des zugeführten Wassers sowie von der parallelen Reaktion mit dem in dem Aschegemisch enthaltenen SiO₂ und Al₂O₃ ab. Da das Hydrationsprodukt eine geringere Dichte besitzt als das Sorptionsmittel, wird durch die Reaktion das Sorptionsmittelkorn "aufgebläht", so daß der Adsorbatmantel (bzw. Gipsmantel) um das Sorptionsmittelkorn aufgebrochen wird.

Dabei hat sich herausgestellt, daß der Umsatzgrad des SO₂-Sorptionsmittels in Hydrationsprodukt sowie die Reaktionsgeschwindigkeit mit steigender Temperatur deutlich zunehmen und im Bereich von ca. 60°C bis ca. 100°C bei atmosphärischem Druck ein Optimum besitzen, welches es im Betrieb anzustreben gilt. Ist die Temperatur zu gering, so läuft die Hydrationsproduktbildung nur sehr langsam ab und ist in der zur Verfügung stehenden Verweilzeit in der Mischeinrichtung nicht vollständig. Ist die Temperatur zu hoch, so kommt es zu einem "Kochen" des Aschegemisches mit der Folge, daß durch die überschüssige Reaktionsenthalpie zusätzliches Wasser verdampft wird, das für die Hydrationsreaktion dann nicht mehr zur Verfügung steht. Die Folge zu hoher Reaktionstemperaturen sind ein erhöhter Wasserverbrauch und mit der zusätzlichen Brüdenbildung verbundene Probleme.

In vorteilhafter Weise wird die Reaktionstemperatur in der Mischeinrichtung geregelt, um eine optimale Umsetzung von nicht reagiertem SO₂-Sorptionsmittel zu einem Hydrationsprodukt zu erzielen. Dadurch wird es ermöglicht, daß die zudosierte Wassermenge bzw. Natriumlösungsmenge entsprechend dem Gehalt des nicht reagierten SO₂-Sorptionsmittels in der Asche angepaßt wird. Somit kann über eine thermodynamische Bilanz die optimale Wasserzugabemenge bestimmt werden.

In weiterer vorteilhafter Ausbildung der Erfindung wird die gewünschte Reaktionstemperatur in der Mischeinrichtung durch Zugabe von vorgewärmtem Wasser in die Mischeinrichtung erzielt, wobei die Wassertemperatur durch einen der Mischeinrichtung vorgeschalteten Vorwärmer geregelt wird. Durch die Vorwärmung des Wassers kann die Reaktionstemperatur in der Mischeinrichtung unabhängig von dem Gehalt des nicht reagierten Sorptionsmittels in der Asche im für den Ablauf der Reaktion günstigen Temperaturbereich eingestellt werden. Anstelle des Wassers ist auch eine wässrige, natriumhaltige Lösung zuführbar.

Durch die Regelung der der Mischeinrichtung zugeführten Wasser- bzw. wässrigen, natriumhaltigen Lösungsmenge kann in vorteilhafterweise Weise das Gemischprodukt in Abhängigkeit der Restfeuchte aus der Mischeinrichtung ausgetragen werden. Damit kann das auszutragende Produkt in gewünschter Weise erstellt werden.

In vorteilhafter Ausbildung der Erfindung wird die Verweilzeit des in die Mischeinrichtung eingeführten Produktes in Abhängigkeit des Hydrationsgrades des auszutragenden Produktes geregelt. Besonders vorteilhaft ist es, daß die Mindestverweildauer in der Mischeinrichtung und/oder den nachfolgenden Förderleitungen eine Minute beträgt, um die Hydration des eingebrachten Produktes in der gewünschten Weise sicherzustellen.

Zweckmäßig ist es, daß das aus der Mischeinrichtung abgezogene Produkt feststoffförmig vorliegt und eine Restfeuchte von kleiner 10 % aufweist. Dadurch wird verhindert, daß, verursacht durch einen zu hohen Wasserüberschuß, ein schlammiges und schlecht förderbares Produkt aus der Mischeinrichtung abgezogen wird.

Die Mischeinrichtung ist zweistufig ausgebildet, wobei in der ersten Stufe der Asche, dem Reaktionsprodukt und dem unreagierten Sorptionsmittel eine Teilmenge des zur Vermischung erforderlichen Wassers bzw. wässrigen, natriumhaltigen Lösung zugemischt wird und in der zweiten Stufe die restliche Teilmenge des Wassers bzw. wässrigen, natriumhaltigen Lösung in Abhängigkeit der Restfeuchte des aus der Mischeinrichtung auszutragenden Produktes geregelt zugemischt wird. Dabei kann in dem ersten Mischer das Augenmerk auf die Vermischung und in dem zweiten Mischer auf die erforderliche Verweilzeit sowie die Temperaturanforderungen gerichtet werden.

Durch die Zuführung des aus der Mischeinrichtung ausgetragenen Produktes in einen Trockner wird dieses Produkt nach seiner Trocknung vorteilhafterweise lagerfähig. Dadurch wird in weiterer vorteilhafter Ausbildung der Erfindung erreicht, daß dieses Produkt zwischengelagert und mit zeitlichem Abstand der Brennkammer zugeführt werden kann.

Vorteilhaft ist es ferner, zumindest einen Teil des aus der Mischeinrichtung ausgetragenen Produktes wieder in die Mischeinrichtung zurückzuführen. Mit dieser Maßnahme läßt sich ebenfalls die Verweilzeit für die Reaktion innerhalb der Mischeinrichtung beeinflussen.

Durch die Zuführung des Aschegemisches in eine Sieb-/Sichteinrichtung vor der Einleitung in die Mischeinrichtung können Korngrößen unerwünschter Größe, beispielsweise größer 300 Mikron, abgesiebt werden. Dadurch können Erosionen innerhalb der Mischeinrichtung sowie der Förderleitungen weitgehend vermieden werden. Derselbe Effekt kann durch Einleitung von unerwünschten größeren Korngrößen in eine Mahleinrichtung und anschließender Weiterleitung in die Mischeinrichtung erzielt werden. Gemäß der Erfindung wird die aus der zirkulierenden Wirbelschichtfeuerungsanlage abgeführte und der Mischeinrichtung zugeführte Asche, das Reaktionsprodukt und das unreagierte SO₂-Sorptionsmittel aus dem Rauchgasfilter als Filterasche und aus der Brennkammer als Bodenasche der Mischeinrichtung über jeweils separate Zuleitungen zugeführt, wobei entweder Filterasche oder Bodenasche oder ein einstellbares Gemisch aus beiden der Mischeinrichtung zugeführt werden kann. Dadurch ist die Möglichkeit gegeben, auf jede Betriebssituation der Wirbelschichtfeuerungsanlage zu reagieren.

Ferner kann die Gemischaufteilung der Filterasche und der Bodenasche durch Anpassung der Körnung von zugegebenem Brennstoff und SO₂-Sorptionsmittel eingestellt werden.

Das Wasser bzw. eine wässrige, natriumhaltige Lösung wird vorteilhafterweise durch mindestens eine Düse in die Mischeinrichtung eingebracht. Je nach Bedarf können an beliebigen Stellen die erforderlichen Düsen innerhalb der Mischeinrichtung angebracht werden.

Vorteilhaft ist es, daß als SO₂-Sorptionsmittel Kalkstein verwendet wird. Dieser ist relativ kostengünstig und als SO₂-Sorptionsmittel bewährt. Ferner kann es auch vorteilhaft sein, Dolomit als SO₂-Sorptionsmittel einzusetzen

In weiterer vorteilhafter Ausbildung der Erfindung wird 50% bis 500% des Feststoffgemisches, bezogen auf das die Brennkammer der Wirbelschichtfeuerungsanlage üblicherweise verlassende Feststoffgemisch, der Mischeinrichtung zur Hydration und anschließend wieder der Brennkammer zugeführt. Dadurch wird eine optimale Einsparung des benötigten SO₂-Sorptionsmittels erreicht.

Bei einem speziellen Fall des erfindungsgemäßen Verfahrens wird ein Teil des SO₂-Sorptionsmittels direkt der Mischeinrichtung aufgegeben. Dadurch kann unabhängig von der im Umlauf befindlichen Menge an Asche sowie nicht reagiertem SO₂-Sorptionsmittels von außen auf die erforderliche Menge an SO₂-Sorptionsmittel eingegriffen werden.

Bei einem weiteren speziellen Fall des erfindungsgemäßen Verfahrens kann ein Hydrationsprodukt bzw. Ca(OH)2 in die Leitung zwischen Mischeinrichtung und Brennkammer aufgegeben werden, wobei dieses Produkt vorteilhafterweise in Strömungsrichtung des Produktes gesehen stromaufwärts eines Zwischenspeichers aufgegeben wird. Dadurch kann ebenfalls von außen auf diese Produktmenge eingewirkt werden.

Bei Verwendung einer wässrigen, natriumhaltigen Lösung enthält die Lösung vorteilhafterweise Natrium in Form von lonen in einer Größenordnung bis 3 Gew. %, bezogen auf das nicht reagierte SO₂-Sorptionsmittel.

Es kann ferner vorteilhaft sein, daß die Mischeinrichtung eine zusätzliche Zuführung von Wasser bzw. einer wässrigen, natriumhaltigen Lösung umfaßt, mittels der stromaufwärts der Mischeinrichtung der Asche, dem Reaktionsprodukt und dem unreagiertem SO₂-Sorptionsmittel Wasser bzw. eine wässrige, natriumhaltige Lösung zugeführt wird. Dadurch kann ggf. auf die Reaktion in der Mischeinrichtung vorab eingegriffen werden.

Durch die erfindungsgemäße Einrichtung kann in effizienter, kostengünstiger und ressourcenschonender Weise das erfindungsgemäße Verfahren durchgeführt werden.

Nachstehend sind Ausführungsbeispiele der Erfindung an Hand der Zeichnungen und der Beschreibung näher erläutert.

Es zeigt:
- Fig. 1: eine schematisiert dargestellte Einrichtung zur Durchführung des erfindungsgemäßen Verfahrens,
- Fig. 2: eine erfindungsgemäße Ausbildung zu Figur 1,

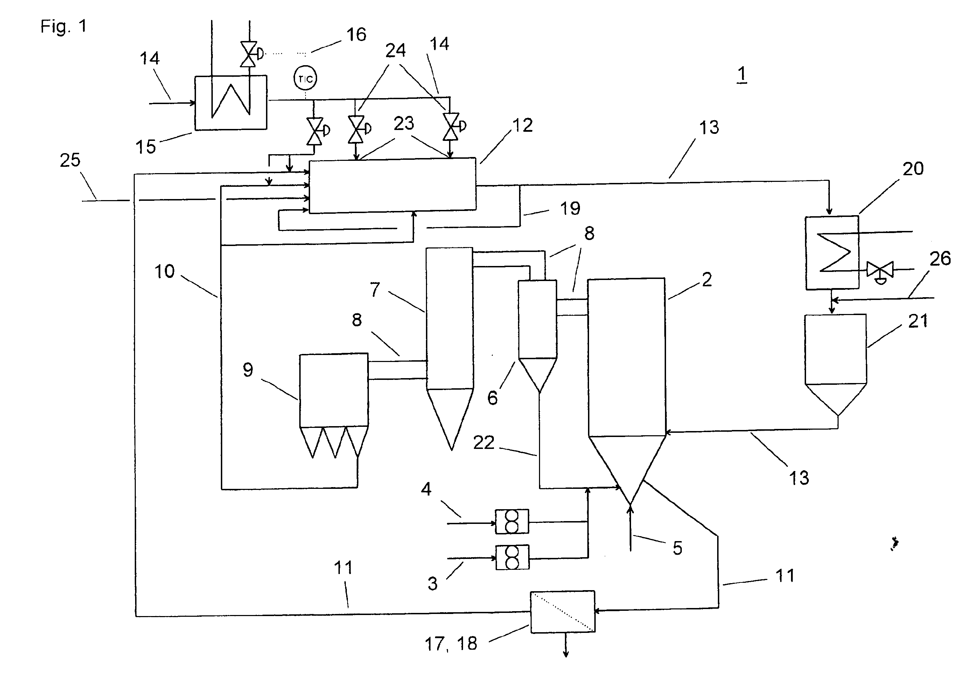

Fig. 1 zeigt in schematischer Weise die erfindungsgemäße Einrichtung zur Reinigung von Schwefeldioxid enthaltenden Rauchgasen aus Wirbelschichtfeuerungsanlagen auf. Mittels der aufgezeigten Einrichtung kann auch das erfindungsgemäße Verfahren durchgeführt werden.

Die erfindungsgemäße zirkulierende Wirbelschichtfeuerungsanlage 1 weist eine Wirbelschichtbrennkammer 2 auf, in der in bekannter Weise Kohle oder andere partikelförmige und kohlenstoffhaltige Brennstoffe unter Zugabe von Luft - als Fluidisierungsmedium über die Leitung 5 sowie als Sekundärluft- bei 700 bis 950 °C im Wirbelschichtbett verfeuert wird. Zur Entschwefelung des schwefelhaltigen Brennstoffes wird der Brennkammer 2 neben dem Brennstoff (Zuleitung 3) ein SO₂-Sorptionsmittel über die Leitung 4 aufgegeben. In der Regel wird partikelförmiger bzw. feinkörniger Kalkstein, d. h. CaCO₃ als SO₂-Sorptionsmittel der Brennkammer 2 aufgegeben. Anstelle des Kalksteins kann auch Dolomit sowie gebrannter Kalk (CaO) oder Ca(OH)₂ als SO₂-Sorptionsmittel eingesetzt werden.

Bei Einsatz von Kalkstein als SO₂-Sorptionsmittel erfolgt zunächst der Brennprozess des Kalkstein zu gebranntem Kalk (CaO) in der Brennkammer 2 und anschließend eine Reaktion des gebrannten Kalksteins mit dem Schwefeldioxid des Rauchgases, das bei der Verbrennung des schwefelhaltigen Brennstoffes entstanden ist. Bei der in der Brennkammer 2 vorherrschenden Temperatur wird Kohlendioxid aus dem Kalkstein ausgetrieben und es bleibt gebrannter Kalk zurück, der aufgrund des Austreibens des CO₂ eine hohe Porosität und somit eine hohe spezifische Oberfläche besitzt. Bei der nachfolgenden Gas-Feststoff-Reaktion des gebrannten Kalks als SO₂-Sorptionsmittel mit Schwefeldioxid und Sauerstoff werden letztere an der Oberfläche und in den Poren des Sorptionsmittels adsorbiert und als Reaktionsprodukt bleibt Gips (CaSO₄) übrig. Dabei ist die vorgenannte hohe spezifische Oberfläche des SO₂-Sorptionsmittels äußerst wichtig für eine hohe Aufnahme- bzw. Reaktionsfähigkeit.

Je nach der Korngröße des eingesetzten Kalksteins bzw. SO₂-Sorptionsmittels und dessen Abriebeigenschaften verbleibt das Sorptionsmittel-Reaktionsprodukt-Korn (Kalk-Gips-Korn) entweder solange in der Brennkammer, bis es über die Aggregate bzw. Mittel 11 der Brennkammerentaschung abgezogen wird, oder das Sorptionsmittel-Reaktionsprodukt-Korn verläßt im Fall, das es sich um ein kleines Partikel handelt, die Brennkammer 2 zusammen mit dem Rauchgasstrom durch die Leitung 8 und wird nach Passieren eines Abscheiders 6 (im Abscheider 6 abgeschiedene Partikel werden durch Leitung 22 der Brennkammer 2 zurückgeführt) und eines Dampferzeugers bzw. von Nachschaltheizflächen 7, an die ein Großteil der im Rauchgas enthaltenen Wärme abgegeben wird, anschließend im nachgeschalteten Rauchgasfilter 9 abgeschieden.

Dabei wird das Gemisch aus Asche, Reaktionsprodukt bzw. Gips und freiem, nicht reagiertem Kalkstein, das über die Brennkammerentaschung abgezogen wird, gemeinhin als Grob- oder auch als Bodenasche und das Gemisch, das im Filter 9 abgeschieden wird, als Filterasche bezeichnet. In der Folge werden diese Bezeichnungen für die vorgenannten Gemische benutzt.

Die Bodenasche und die Filterasche gelangen somit über zwei getrennte Kreisläufe - die Bodenasche über die Leitung 11 sowie die im Rauchgasfilter 9 vom Rauchgas abgetrennte Filterasche über die Leitungen 8 (gemeinsam mit dem Rauchgas) und 10 - von der Brennkammer 2 in eine mechanische Mischeinrichtung 12. In dieser Mischeinrichtung 12 wird dem vorgenannten Gemisch Wasser durch eine Zuleitung 14 und über mindestens eine Aufgabedüse 23 zur Vermischung zugeführt. Falls erforderlich können auch mehrere Aufgabedüsen 23 über die Produktdurchlaufstrecke in der Mischeinrichtung 12 angeordnet werden. Die Mischeinrichtung 12 kann ferner stromaufwärts der Mischeinrichtung 12 in der Leitung 10 und/oder 11 eine weitere Aufgabedüse 23 umfassen. Durch diese Düse kann auf die Vermischung Einfluß genommen werden.

Die Zugabe von Wasser in der Mischeinrichtung 12 erfolgt erfindungsgemäß bei einer Reaktionstemperatur von 60 °C bis 100 °C bei atmosphärischem Druck (ca. 1 bar). Dabei reagiert der noch freie, d. h. unreagierte gebrannte Kalk innerhalb einer exothermen Reaktion zu Kalkhydrat (Hydrationsprodukt), wobei die Reaktionsgeschwindigkeit und die Temperaturerhöhung vom Freikalkgehalt der Asche, der Temperatur der zugeführten Asche sowie der Temperatur des zugeführten Wassers abhängt. Infolge der geringeren Dichte des Kalkhydrates gegenüber Kalk wird durch die Reaktion das Kalkkorn aufgebläht, so daß der Gipsmantel um das Kalkkorn aufgebrochen und der Gipsmantel durchlässig wird und dadurch die poröse Oberfläche des Kalkkornes zumindest teilweise seine SO₂-Sorptionsfähigkeit wiedererlangt.

Anstelle des Wassers kann auch eine wässrige, natriumhaltige Lösung dem Produktgemisch in der Mischeinrichtung 12 zugeführt werden. Durch das in der Lösung enthaltene Natrium wird die Oberflächentemperatur des Reaktionsproduktes herabgesetzt und an dessen Oberfläche eine flüssige Phase gebildet, die die SO₂-Sorptionsfähigkeit des Reaktionsproduktes bezüglich der Reaktion von Natrium mit SO₂ (Na₂SO₄) fördert.

Die erforderliche Reaktionstemperatur in der Mischeinrichtung 12 kann geregelt werden, wobei vorteilhafterweise das der Mischeinrichtung 12 durch Leitung 14 zugeführte Wasser bzw. wässrige, natriumhaltige Lösung entsprechend der geforderten Reaktionstemperatur vorgewärmt wird. Dies geschieht in einem in der Leitung 14 angeordneten Vorwärmer 15, der in Abhängigkeit der geforderten Reaktionstemperatur in der Mischeinrichtung 12 mittels Heizregelung 16 geregelt wird. Es ist ferner möglich, die der Mischeinrichtung 12 zugeführte Menge an Wasser bzw. wässrige, natriumhaltige Lösung in Abhängigkeit der Restfeuchte des aus der Mischeinrichtung 12 auszutragenden Produktes zu regeln. Dies erfolgt vorteilhaft durch entsprechende Ansteuerung der strömungsmittelseitig stromaufwärts der an der Mischeinrichtung 12 angeordneten Düse bzw. Düsen 23 liegenden Regelventile 24.

Um den Hydrationsgrad des aus der Mischeinrichtung 12 auszutragenden Produktes in einem geforderten Bereich zu erzielen kann auch die Verweilzeit des in die Mischeinrichtung 12 eingebrachten Produktes geregelt werden. Dies kann beispielsweise durch Regelung der Transportgeschwindigkeit in der Mischeinrichtung 12 erfolgen. Zweckmäßigerweise beträgt die Mindestverweildauer des zu vermischenden und zu reagierenden Produktes in der Mischeinrichtung 12 und ggf. den nachgeschalteten Förderleitungen eine Minute.

Eine Rückführleitung 19 ermöglicht es, einen Teil des aus der Mischeinrichtung 12 ausgetragenen Produktes wieder der Mischeinrichtung 12 zur weiteren bzw. nochmaligen Reaktion aufzugeben und damit auch die Verweilzeit zu beeinflussen.

Neben der vorzugsweise unter atmosphärischem Druck und bei 60 °C bis 100 °C Reaktionstemperatur ablaufenden Reaktion in der Mischeinrichtung 12 kann die Reaktion innerhalb der Mischeinrichtung 12 auch unter höherem Druck vorgenommen werden. Die Reaktion kann beispielsweise unter einem Druck von 5 bar sowie einer Reaktionstemperatur von gleich bzw. kleiner 151 °C, d.h. knapp unterhalb der diesem Druck zugeordneten Siedetemperatur, bewerkstelligt werden. Die Mischeinrichtung 12 ist entsprechend dem gewählten Druck druckdicht ausgeführt.

Zur Vermischung des Produktgemisches mit dem Wasser bzw. wässrigen, natriumhaltigen Lösung werden in zweckmäßiger Ausbildung der Erfindung Pflugscharmischer oder Paddelmischer als Mischeinrichtung 12 eingesetzt. Es können gegebenenfalls jedoch auch Rührwerke eingesetzt werden.

Durch die Zuführung der Grob- bzw. Bodenasche und der Filterasche in zwei getrennten Leitungen bzw. Kreisläufen kann in Ausgestaltung der Erfindung der Anteil der jeweils zugeführten Boden- bzw. Filterasche variiert werden. Es können beispielsweise fünf Mengenanteile Boden- sowie ein Mengenanteil Filterasche der Mischeinrichtung 12 zugeführt werden. Dies ermöglicht eine Betriebsweise der Mischeinrichtung 12, die auf die anfallenden Boden- bzw. Filteraschemengen aus der Brennkammer 2 abgestimmt werden kann.

Durch die Anwendung des erfindungsgemäßen Verfahrens bei einer zirkulierenden Wirbelschichtfeuerungsanlage kommen deren Vorteile zur Geltung, als da sind eine enge Brennkammertemperaturregelung, eine lange Verweilzeit der zu verfeuernden und der als SO₂-Sorptionsmittel eingebrachten Feststoffpartikel, eine hohe Gas-/Feststoffpartikel-Vermischung und daraus resultierend ein niedriges Ca/S-Verhältnis.

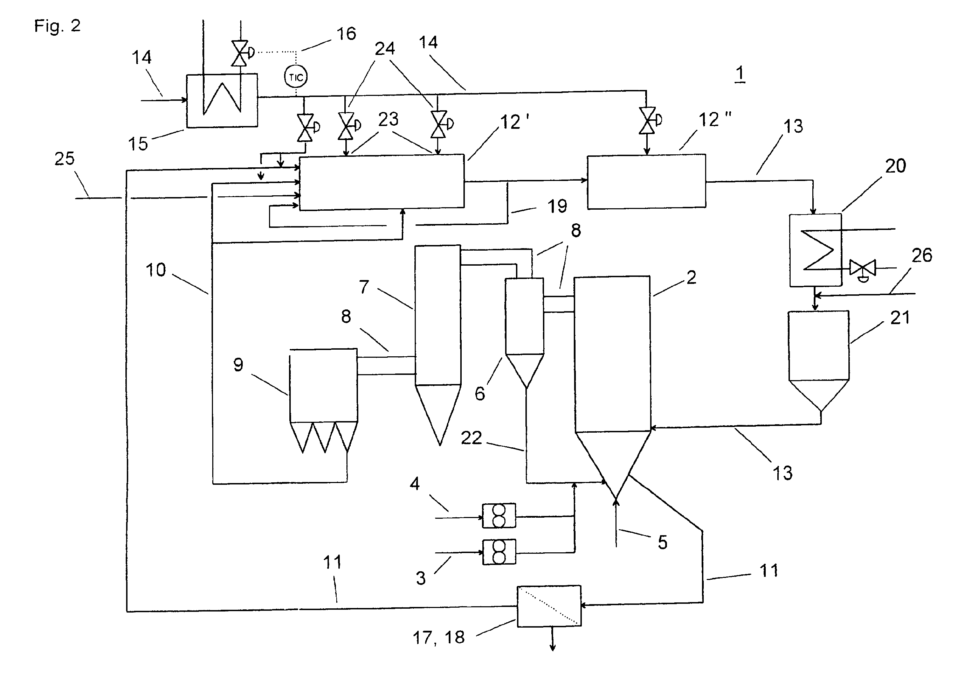

Figur 2 zeigt die zweistufige Mischeinrichtung 12, wobei in der ersten Stufe 12' der Asche, dem Gipskorn und dem unreagierten gebrannten Kalk eine Teilmenge des zur Vermischung erforderlichen Wassers bzw. wässrigen, natriumhaltigen Lösung zugemischt wird und in der der ersten Stufe 12' nachgeschalteten zweiten Stufe 12" die restliche Teilmenge des Wassers bzw. wässrigen, natriumhaltigen Lösung in Abhängigkeit der Restfeuchte des aus der Mischeinrichtung 12 auszutragenden Produktes geregelt zugemischt wird.

Die aus der Mischeinrichtung 12 ausgetragene Asche, der Gips und das Hydrationsprodukt liegt in vorteilhafter Weise feststoffförmig vor und weist eine Restfeuchte von kleiner 10 % auf. Das aus der Mischeinrichtung 12 ausgetragene Produkt kann ferner einem Trockner 20 zugeführt werden, in dem das Produkt beispielsweise zu einem lagerfähigen Produkt getrocknet werden kann und gegebenenfalls in einem Zwischenspeicher 21 gelagert und mit zeitlichem Abstand der Wirbelschichtbrennkammer 2 zugeführt werden kann.

Durch die Leitung 13 wird die Asche, der Gips (Reaktionsprodukt) und das Kalkhydrat (Hydrationsprodukt) von der Mischeinrichtung 12 der Brennkammer 2 zugeführt, in der es aufgrund der dort herrschenden Temperaturen zu einer Rückreaktion und Abspaltung des Wasserdampfes vom Kalkhydrat kommt. Durch die thermische Beanspruchung kommt es zu zusätzlichen Rissbildungen im Kalkkorn (Reaktionsprodukt), wodurch die spezifische Oberfläche weiter erhöht wird. Durch das Aufbrechen des Gipsmantels sowie durch die zusätzliche geschaffene Reaktionsoberfläche durch das Aufblähen des Kalkkerns steht der noch nicht reagierte Kalk im Inneren des vorher ummantelten bzw. teilweise ummantelten Kalkkorns, d.h. SO₂-Sorptionsmittels wieder für eine weitere Entschwefelungsreaktion zur Verfügung.

Das erfindungsgemäße Verfahren wird besonders effizient angewandt, wenn der Gehalt an in der Brennkammer 2 nicht reagiertem SO₂-Sorptionsmittel 5 bis 40 Gewichtsprozent des aus der Brennkammer 2 ausgetragenen Feststoffgemisches beträgt.

Vor Zuleitung der Asche, dem Reaktionsprodukt Gips und dem unreagiertem Kalk in die Mischeinrichtung 12 kann dieses Produkt in dazu geeigneten Einrichtungen 17, 18 gesiebt/gesichtet und/oder gemahlen werden um für die Vermischung bestmögliche Bedingungen zu erhalten. Dabei ist es zweckmäßig, ein Sieb mit einer derartigen Maschenweite einzusetzen, daß Partikel größer 300 Mikron abgesiebt und aus dem Kreislauf ausgeschieden werden. Dies hat den Vorteil, daß größere Erosionen in der Mischeinrichtung 12 sowie die Hydration von Steinen vermieden werden.

Die erfindungsgemäße Einrichtung bzw. das erfindungsgemäße Verfahren ermöglicht es, daß entweder Brennkammerbodenasche oder Filterasche oder ein Gemisch aus beiden der Mischeinrichtung 12 zugeführt werden kann. Dabei kann vorteilhafterweise die Gemischaufteilung der Filterasche und der Bodenasche durch Anpassung der Körnung von zugegebenem Brennstoff und Kalkstein eingestellt werden.

Bei dem erfindungsgemäßen Verfahren werden gegenüber dem bisher bekannten Verfahren 20 % bis 40 % an SO₂-Sorptionsmittel, beispielsweise Kalkstein, eingespart. Dies ergibt im Vergleich bei einer üblicherweisen Schwefeleinbindung von 95 % und bei einem üblichen Ca/S - Verhältnis (das Verhältnis von SO₂-Sorptionsmittel zu einzubindendem Schwefel) von 2 bei dem erfindungsgemäßen Verfahren und bei einer Schwefeleinbindung von 95 % ein Ca/S - Verhältnis von 1,2. Dieser Wert liegt somit bereits sehr nahe an der idealen Stöchiometrie von 1,0. Durch das erfindungsgemäße Verfahren wird somit wesentlich weniger SO₂-Sorptionsmittel zur Einbindung des im Rauchgas vorhandenen Schwefels benötigt. Dies wirkt sich wesentlich auf die Betriebskosten der Anlage aus, insbesondere bei Verwendung von hochschwefelhaltigen Brennstoff.

Der Transport des Produktes in den Leitungen 10, 11, 13 bzw. 19 kann beispielsweise pneumatisch bzw. mechanisch erfolgen.

Durch die Zuleitung 25 wird es ermöglicht, zusätzlich SO₂-Sorptionsmittel der Mischeinrichtung 12 aufzugeben. Dadurch kann unabhängig vom Gehalt an unreagiertem SO₂-Sorptionsmittel in dem der Mischeinrichtung 12 aufgegebenem Gemisch dieses durch ein extern zugeführtes SO₂-Sorptionsmittel angereichert werden. Ebenso kann durch die Leitung 26 das Hydrationsprodukt Ca(OH)₂ der Leitung 13, die von der Mischeinrichtung 12 zur Brennkammer 2 führt, zugeführt werden. Durch diese Maßnahme kann auf die Hydrationsmittelmenge Einfluß genommen werden, d.h. auf das Mittel, das in der Brennkammer 2 wieder zu einem SO₂-Sorptionsmittel reaktiviert wird.

In einer vorteilhaften Ausgestaltung der Erfindung werden 50 bis 500 Gewichts % des Feststoffgemisches, bezogen auf das die Brennkammer 2 der Wirbelschichtfeuerungsanlage 1 üblicherweise verlassende Feststoffgemisch, der Mischeinrichtung 2 zur Hydration und anschließend wieder der Brennkammer 2 zugeführt.

Bei dem erfindungsgemäßen Verfahren handelt es sich üblicherweise um ein kontinuierliches Verfahren, bei speziellen Anwendungen ist jedoch auch eine diskontinuierliche Vermischung und Anreicherung des Aschegemisches mit Wasser in der Mischeinrichtung möglich. In diesem Fall wird das Hydrationsprodukt der Brennkammer 2 entweder diskontinuierlich zugeführt oder das in einem Zwischenspeicher 21 gespeicherte Hydrationsprodukt wird kontinuierlich aus diesem Zwischenspeicher 21 abgezogen und der Brennkammer 2 zugeführt.

### Bezugszeichenliste

- 1: Wirbelschichtfeuerungsanlage
- 2: Wirbelschichtbrennkammer
- 3: Kohlezugabe in Wirbelschichtbrennkammer
- 4: SO₂-Sorptionsmittelzugabe in Wirbelschichtbrennkammer
- 5: Fluidisierungsmittel- bzw. Luftzugabe in Wirbelschichtbrennkammer
- 6: Abscheider bzw. Zyklon
- 7: Dampferzeuger bzw. Nachschaltheizflächen
- 8: Leitung zwischen Wirbelschichtbrennkammer und Rauchgasfilter
- 9: Rauchgasfilter
- 10: Leitung zwischen Rauchgasfilter und Mischeinrichtung
- 11: Bodenasche-Leitung zwischen Wirbelschichtbrennkammer und Mischeinrichtung
- 12: Mischeinrichtung
- 13: Leitung zwischen Mischeinrichtung und Wirbelschichtbrennkammer
- 14: Zuleitung von Wasser bzw. einer wässrigen, natriumhaltigen Lösung zu der Mischeinrichtung
- 15: Vorwärmer des Wassers bzw. der wässrigen, natriumhaltigen Lösung
- 16: Heizregelung des Vorwärmers
- 17: Sieb oder Sichter
- 18: Mahleinrichtung
- 19: Rückführleitung an der Mischeinrichtung
- 20: Trocknungseinrichtung
- 21: Zwischenspeicher
- 22: Rückführleitung zwischen Abscheider und Wirbelschichtbrennkammer
- 23: Düse
- 24: Regelventil
- 25: Zuführung Sorptionsmittel (extern)
- 26: Zuführung Hydrationsprodukt Ca (OH)₂ (extern)

## Patentansprüche

1. Verfahren zur Reinigung von Schwefeldioxid enthaltenden Rauchgasen aus einer zirkulierenden Wirbelschichtfeuerungsanlage, wobei in der Brennkammer der Wirbelschichtfeuerungsanlage schwefelhaltige Kohle unter Zugabe von Luft bei einer Temperatur von 700 bis 950 °C in einer Wirbelschicht verbrannt wird und dabei schwefeldioxidhaltiges Rauchgas gebildet und der Brennkammer ein partikelförmiges SO₂-Sorptionsmittel aufgegeben wird,
ein Teil der bei der Verbrennung entstehenden Asche und ein Teil des bei der Reaktion des SO₂-Sorptionsmittels mit dem Schwefeldioxid entstehenden Reaktionsproduktes sowie ein Teil des unreagierten SO₂-Sorptionsmittels aus der Brennkammer ausgetragen und einer Mischeinrichtung zugeführt wird,
wobei das aus der zirkulierenden Wirbelschichtfeuerungsanlage abgeführte und der Mischeinrichtung zugeführte Feststoffgemisch aus Asche, Reaktionsprodukt und unreagiertes SO₂-Sorptionsmittel aus einem Rauchgasfilter als Filterasche und aus der Brennkammer als Boden- bzw. Grobasche der Mischeinrichtung jeweils über separate Zuleitungen zugeführt wird, wobei entweder Filterasche oder Bodenasche oder ein einstellbares Gemisch aus beiden der Mischeinrichtung zugeführt wird,
in der Mischeinrichtung der Asche, dem Reaktionsprodukt und dem unreagierten SO₂-Sorptionsmittel Wasser bzw. eine wässrige, natriumhaltige Lösung zugeführt und mit diesen vermischt wird und dabei das unreagierte SO₂-Sorptionsmittel bei einer Reaktionstemperatur von 60° bis 100° und bei atmosphärischem Druck zu einem Hydrationsprodukt umgewandelt wird,
wobei die Mischeinrichtung zweistufig ausgebildet ist, wobei in der ersten Stufe der Asche, dem Reaktionsprodukt und dem unreagierten SO₂-Sorptionsmittel eine Teilmenge des zur Vermischung erforderlichen Wassers bzw. wässrigen, natriumhaltigen Lösung zugemischt wird und in der zweiten Stufe die restliche Teilmenge des Wassers bzw. wässrigen, natriumhaltigen Lösung in Abhängigkeit der Restfeuchte des aus der Mischeinrichtung auszutragenden Produktes geregelt zugemischt wird,
die Asche gemeinsam mit dem Reaktions- und dem Hydrationsprodukt aus der Mischeinrichtung in die Brennkammer der Wirbelschichtfeuerungsanlage zurückgeführt wird
und das Hydrationsprodukt bei einer Brennkammertemperatur von 700° bis 950° C zu einem SO₂- Sorptionsmittel reaktiviert wird.

2. Verfahren nach Anspruch 1, **dadurch gekennzeichnet, daß** die Mischeinrichtung eine zusätzliche Zuführung von Wasser bzw. einer wässrigen, natriumhaltigen Lösung umfasst, mittels der stromaufwärts der Mischeinrichtung der Asche, dem Reaktionsprodukt und dem unreagiertem SO₂-Sorptionsmittel Wasser bzw. eine wässrige, natriumhaltige Lösung zugeführt wird.

3. Verfahren nach Anspruch 1 oder 2, **dadurch gekennzeichnet, daß** die Reaktionstemperatur der Mischeinrichtung geregelt wird.

4. Verfahren nach Anspruch 3, **dadurch gekennzeichnet, daß** zur Regelung der Reaktionstemperatur das der Mischeinrichtung zugeführte Wasser bzw. die wässrige, natriumhaltige Lösung entsprechend der geforderten Reaktionstemperatur vorgewärmt wird.

5. Verfahren nach einem der vorgenannten Ansprüche, **dadurch gekennzeichnet, daß** die Verweilzeit der in die Mischeinrichtung eingeführten Produkte in Abhängigkeit des Hydrationsgrades des auszutragenden Produktes geregelt wird.

6. Verfahren nach einem der vorgenannten Ansprüche, **dadurch gekennzeichnet, daß** die Mindestverweildauer der in die Mischeinrichtung eingeführten Produkte in der Mischeinrichtung und/oder den nachfolgenden Förderleitungen 1 Minute beträgt.

7. Verfahren nach einem der vorgenannten Ansprüche, **dadurch gekennzeichnet, daß** die aus der Mischeinrichtung ausgetragene Asche, das Reaktionsprodukt und das Hydrationsprodukt feststoffförmig vorliegt und eine Restfeuchte von kleiner 10 % aufweist.

8. Verfahren nach einem der vorgenannten Ansprüche, **dadurch gekennzeichnet, daß** die aus der Mischeinrichtung ausgetragene Asche, das Reaktionsprodukt und das Hydrationsprodukt einem Trockner zugeführt und zu einem lagerfähigen Produkt getrocknet werden.

9. Verfahren nach einem der vorgenannten Ansprüche, **dadurch gekennzeichnet, daß** die aus der Mischeinrichtung ausgetragene Asche, das Reaktionsprodukt und das Hydrationsprodukt in einem Zwischenspeicher gelagert und zeitlich beabstandet der Wirbelschichtbrennkammer zugeführt wird.

10. Verfahren nach einem der vorgenannten Ansprüche, **dadurch gekennzeichnet, daß** zumindest ein Teil der aus der Mischeinrichtung ausgetragenen Asche, des Reaktionsproduktes und des Hydrationsproduktes wieder der Mischeinrichtung zugeführt wird.

11. Verfahren nach einem der vorgenannten Ansprüche, **dadurch gekennzeichnet, daß** die Asche, das Reaktionsprodukt und das unreagierte SO₂-Sorptionsmittel vor Zuführung in die Mischeinrichtung gesiebt und/oder gesichtet wird.

12. Verfahren nach einem der vorgenannten Ansprüche, **dadurch gekennzeichnet, daß** die Asche, das Reaktionsprodukt und das unreagierte SO₂-Sorptionsmittel vor Zuführung in die Mischeinrichtung gemahlen wird.

13. Verfahren nach einem der vorgenannten Ansprüche, **dadurch gekennzeichnet, daß** die Gemischaufteilung der Filterasche und der Bodenasche durch Anpassung der Körnung von zugegebenem Brennstoff und SO₂-Sorptionsmittel eingestellt wird.

14. Verfahren nach einem der vorgenannten Ansprüche, **dadurch gekennzeichnet, daß** das Wasser bzw. eine wässrige, natriumhaltige Lösung durch mindestens eine Düse in die Mischeinrichtung eingebracht wird.

15. Verfahren nach einem der vorgenannten Ansprüche, **dadurch gekennzeichnet, daß** der Gehalt an in der Brennkammer nicht reagiertem SO₂-Sorptionsmittel 5 bis 40 Gew. % des aus der Brennkammer ausgetragenen Feststoffgemisches beträgt.

16. Verfahren nach einem der vorgenannten Ansprüche, **dadurch gekennzeichnet, daß** als SO₂-Sorptionsmittel Kalkstein verwendet wird.

17. Verfahren nach einem der Ansprüche 1 bis 15, **dadurch gekennzeichnet, daß** als SO₂-Sorptionsmittel Dolomit verwendet wird.

18. Verfahren nach einem der vorgenannten Ansprüche, **dadurch gekennzeichnet, daß** die wässrige, natriumhaltige Lösung Natrium in Form von lonen in einer Größenordnung bis 3 Gew. %, bezogen auf das nicht reagierte SO₂-Sorptionsmittel, enthält.

19. Verfahren nach einem der vorgenannten Ansprüche, **dadurch gekennzeichnet, daß** zumindest ein Teil des SO₂-Sorptionsmittels direkt der Mischeinrichtung aufgegeben wird.

20. Verfahren nach einem der vorgenannten Ansprüche, **dadurch gekennzeichnet, daß** Ca(OH)₂ in die Leitung zwischen Mischeinrichtung und Brennkammer aufgegeben wird.

21. Verfahren nach Anspruch 20, **dadurch gekennzeichnet, daß** Ca(OH)₂ in Strömungsrichtung des in der Leitung zwischen Mischeinrichtung und Brennkammer strömenden Produktes gesehen stromaufwärts eines Zwischenspeichers aufgegeben wird.

22. Verfahren nach einem der vorgenannten Ansprüche, **dadurch gekennzeichnet, daß** 50 bis 500 Gew.% des Feststoffgemisches, bezogen auf das die Brennkammer der Wirbelschichtfeuerungsanlage üblicherweise verlassende Feststoffgemisch, der Mischeinrichtung zur Hydration und anschließend wieder der Brennkammer zugeführt wird.

23. Einrichtung zur Durchführung des Verfahrens nach wenigstens einem der vorgenannten Ansprüche, umfassend
eine Brennkammer (2), in der schwefelhaltige Kohle unter Zugabe von Luft in einer Wirbelschicht verbrannt wird. Mittel zum Austrag eines Teiles der bei der Verbrennung entstehenden Produkte aus der Brennkammer ( 2 ) und Zuführung in eine mechanische Mischeinrichtung (12), die zweistufig ausgebildet ist, und der Wasser bzw. eine wässrige, natriumhaltige Lösung zugeführt wird, wobei die Filterasche und die Boden- bzw. Grobasche der Mischeinrichtung (12) jeweils über separate Zuleitungen zugeführt werden,
Mittel zum Austrag der Produkte aus der Mischeinrichtung (12) und Zurückführung in die Brennkammer (2).

24. Einrichtung nach Anspruch 23, **dadurch gekennzeichnet, daß** mittels der Zuführung ( 14 ) von Wasser bzw. einer wässrigen, natriumhaltigen Lösung stromaufwärts der Mischeinrichtung (12) der Asche, dem der Mischeinrichtung (12) der Asche, dem Reaktionsprodukt und dem unreagiertem SO₂-Sorptionsmittel Wasser bzw. eine wässrige, natriumhaltige Lösung zuführbar ist. ,'

25. Einrichtung nach Anspruch 23 oder 24, **dadurch gekennzeichnet, daß** in Strömungs- bzw. Förderrichtung des unreagierten SO₂-Sorptionsmittels gesehen stromaufwärts der Mischeinrichtung ( 12) eine Sieb- bzw. Sichteinrichtung ( 17 ) zur Siebung bzw. Sichtung der Asche, des Reaktionsproduktes und des unreagierten SO₂-Sorptionsmittels vorgesehen ist.

26. Einrichtung nach einem der Ansprüche 23 bis 25, **dadurch gekennzeichnet, daß** in Strömungs- bzw. Förderrichtung des unreagierten SO₂-Sorptionsmittels gesehen stromaufwärts der Mischeinrichtung ( 12 ) eine Mahleinrichtung ( 18 ) zur Vermahlung der Asche, des Reaktionsproduktes und des unreagierten SO₂-Sorptionsmittels vorgesehen ist.

27. Einrichtung nach einem der Ansprüche 23 bis 26, **dadurch gekennzeichnet, daß** in Strömungs- bzw. Förderrichtung des Hydrationsproduktes gesehen stromabwärts der Mischeinrichtung ( 12) eine Trocknungseinrichtung ( 20 ) zum Trocknen der Asche, des Reaktionsproduktes und des Hydrationsproduktes vorgesehen ist.

28. Einrichtung nach einem der Ansprüche 23 bis 27, **dadurch gekennzeichnet, dass** in Strömungs- bzw. Förderrichtung des Hydrationsproduktes gesehen zwischen Mischeinrichtung ( 12) und Brennkammer ( 2 ) ein Zwischenspeicher ( 21 ) zur Speicherung der Asche, des Reaktionsproduktes und des Hydrationsproduktes angeordnet ist.

29. Einrichtung nach einem der Ansprüche 23 bis 28, **dadurch gekennzeichnet, daß** die Mischeinrichtung ( 12) mit mindestens einer Düse ( 23 ) zur Zuführung von Wasser bzw. einer wässrigen, natriumhaltigen Lösung ausgebildet ist.

30. Einrichtung nach einem der Ansprüche 23 bis 29, **dadurch gekennzeichnet, daß** die Mischeinrichtung (12) als Pflugschar- oder Paddelmischer oder Rührwerk ausgebildet ist.

## Claims

1. Procedure for the cleaning of flue gases containing sulfur dioxide that come from a circulating fluidized-bed firing system, wherein within the combustion chamber of the fluidized-bed firing system sulfur-containing coal is burned by the addition of air at a temperature of 700 to 950 °C in a fluidized bed, and therein flue gas containing sulfur dioxide is formed and a particulate SO₂ sorbent is delivered to the combustion chamber,
a portion of the ash produced in the combustion and a portion of the reaction product produced in the reaction of the SO₂ sorbent with the sulfur dioxide as well as a portion of the unreacted SO₂ sorbent is carried off from the combustion chamber and is fed to a mixing unit,
wherein the mixture of solids consisting of ash, reaction product, and unreacted SO₂ sorbent drawn off from the circulating fluidized-bed firing system and fed to the mixture unit is fed to such mixing unit from a flue-gas filter as filter ash and from the combustion chamber as bottom or coarse ash via separate supply lines each time, wherein either the filter ash or the bottom ash or an adjustable mixture of the two is fed to the mixing unit,
in the mixing unit, water or an aqueous sodium-containing solution is fed to the ash, the reaction product, and the unreacted SO₂ sorbent and is mixed together with this, and therein the unreacted SO₂ sorbent is converted into a hydration product at a reaction temperature of 60 °C to 100° and at atmospheric pressure,
wherein the mixing unit is constructed in two stages, wherein in the first stage a portion of the water or aqueous sodium-containing solution required for the mixing is admixed with the ash, the reaction product, and the unreacted SO₂ sorbent, and in the second stage the remaining portion of the water or aqueous sodium-containing solution is admixed in a regulated fashion as a function of the residual moisture of the product to be carried off from the mixing unit,
the ash together with the reaction product and hydration product from the mixing unit is returned into the combustion chamber of the fluidized-bed firing system,
and the hydration product is reactivated into an SO₂ sorbent at a combustion-chamber temperature of 700° to 950° C.

2. Procedure based on Claim 1, **characterized** such that the mixing unit includes an additional supply of water or an aqueous sodium-containing solution, by means of which upstream of the mixing unit water or an aqueous sodium-containing solution is fed to the ash, the reaction product, and the unreacted SO₂ sorbent.

3. Procedure based on Claim 1 or 2, **characterized** such that the reaction temperature of the mixing unit is regulated.

4. Procedure based on Claim 3, **characterized** such that for the regulation of the reaction temperature the water or the aqueous sodium-containing solution fed to the mixing unit is preheated so as to be adequate to the required reaction temperature.

5. Procedure based on one of the preceding claims, **characterized** such that the dwell time of the products introduced into the mixing unit is regulated as a function of the degree of hydration of the product to be carried off.

6. Procedure based on one of the preceding claims, **characterized** such that the minimum dwell time of the products introduced into the mixing unit amounts to 1 minute in the mixing unit and/or the subsequent delivery lines.

7. Procedure based on one of the preceding claims, **characterized** such that the ash, the reaction product, and the hydration product carried off from the mixing unit exist in a solid form and have a residual moisture of less than 10 %.

8. Procedure based on one of the preceding claims, **characterized** such that the ash, the reaction product, and the hydration product carried off from the mixing unit are fed to a drier and are dried into a product capable of being stored.

9. Procedure based on one of the preceding claims, **characterized** such that the ash, the reaction product, and the hydration product carried off from the mixing unit are stored in an intermediate store and are fed to the fluidized-bed combustion chamber after a certain time interval.

10. Procedure based on one of the preceding claims, **characterized** such that at least a portion of the ash, the reaction product, and the hydration product carried off from the mixing unit is fed again to the mixing unit.

11. Procedure based on one of the preceding claims, **characterized** such that the ash, the reaction product, and the unreacted SO₂ sorbent is sifted and/or sized before feeding into the mixing unit.

12. Procedure based on one of the preceding claims, **characterized** such that the ash, the reaction product, and the unreacted SO₂ sorbent is ground before feeding into the mixing unit.

13. Procedure based on one of the preceding claims, **characterized** such that the apportionment of the mixture of filter ash and bottom ash is set by adjusting the grain sizes of added fuel and SO₂ sorbent.

14. Procedure based on one of the preceding claims, **characterized** such that the water or an aqueous sodium-containing solution is introduced into the mixing unit by way of at least one nozzle.

15. Procedure based on one of the preceding claims, **characterized** such that the concentration of non-reacted SO₂ sorbent in the combustion chamber amounts to 5 to 40 % by weight of the mixture of solids carried off from the combustion chamber.

16. Procedure based on one of the preceding claims, **characterized** such that limestone is used as the SO₂ sorbent.

17. Procedure based on one of the claims 1 to 15, **characterized** such that dolomite is used as the SO₂ sorbent.

18. Procedure based on one of the preceding claims, **characterized** such that the aqueous sodium-containing solution contains sodium in the form of ions on an order of magnitude of up to 3 % by weight, relative to the non-reacted SO₂ sorbent.

19. Procedure based on one of the preceding claims, **characterized** such that at least a portion of the SO₂ sorbent is delivered directly to the mixing unit.

20. Procedure based on one of the preceding claims, **characterized** such that Ca(OH)₂ is delivered into the line between the mixing unit and combustion chamber.

21. Procedure based on Claim 20, **characterized** such that Ca(OH)₂ is delivered upstream of an intermediate store, seen in the direction of flow of the product flowing in the line between the mixing unit and the combustion chamber.

22. Procedure based on one of the preceding claims, **characterized** such that 50 to 500 % by weight of the mixture of solids, relative to the mixture of solids normally leaving the combustion chamber of the fluidized-bed firing system, is fed to the mixing unit for hydration and subsequently fed again to the combustion chamber.

23. Apparatus for the execution of the procedure based on at least one of the preceding claims, including
a combustion chamber (2), in which sulfur-containing coal is burned by the addition of air in a fluidized bed,
a means for carrying off a portion of the products from the combustion chamber (2), and a feeding of this into a mechanical mixing unit (12), which is constructed two-stage and to which water or an aqueous sodium-containing solution is fed,
wherein the filter ash and the bottom- and coarse ash respectively is fed each via separate supply lines to the mixing unit (12),
a means for carrying the products off from the mixing unit (12) and for returning this into the combustion chamber (2).

24. Apparatus based on Claim 23, **characterized** such that upstream of the mixing unit (12) water or an aqueous sodium-containing solution can be fed to the ash, the reaction product, and the unreacted SO₂ sorbent by means of supply line (14) for water or for an aqueous sodium-containing solution.

25. Apparatus based on claim 23 or 24, **characterized** such that upstream of the mixing unit (12), seen in the direction of flow or of delivery of the unreacted SO₂ sorbent, a sifting or sizing unit (17) is provided for the sifting or sizing of the ash, the reaction product, and the unreacted SO₂ sorbent.

26. Apparatus based on one of the claims 23 to 25, **characterized** such that upstream of the mixing unit (12), seen in the direction of flow or of delivery of the unreacted SO₂ sorbent, a grinding unit (18) is provided for grinding the ash, the reaction product, and the unreacted SO₂ sorbent.

27. Apparatus based on one of the claims 23 to 26, **characterized** such that downstream of the mixing unit (12), seen in the direction of flow or of delivery of the hydration product, a drying unit (20) is provided for the drying of the ash, the reaction product, and the hydration product.

28. Apparatus based on one of the claims 23 to 27, **characterized** such that between the mixing unit (12) and the combustion chamber (2), seen in the direction of flow or of delivery of the hydration product, an intermediate store (21) is positioned for the storage of the ash, the reaction product, and the hydration product.

29. Apparatus based on one of the claims 23 to 28, **characterized** such that the mixing unit (12) is constructed with at least one nozzle (23) for the supplying of water or an aqueous sodium-containing solution.

30. Apparatus based on one of the claims 23 to 29, **characterized** such that the mixing unit (12) is constructed as a plowshare or paddle mixer or an agitator.

## Revendications

1. Procédé pour purifier des gaz de fumée contenant du dioxyde de soufre, issus d'une installation de chauffage à lit fluidisé circulant, du charbon contenant du soufre étant brûlé avec apport d'air dans la chambre de combustion de l'installation de chauffage à lit fluidisé à une température de 700 à 950°C dans un lit fluidisé, et du gaz de fumée contenant du dioxyde de soufre se formant alors et un agent d'adsorption de SO₂ sous forme de particules étant chargé dans la chambre de combustion, une partie de la cendre formée lors de la combustion et une partie du produit de réaction formé lors de la réaction de l'agent d'adsorption de SO₂ avec le dioxyde de soufre ainsi qu'une partie de l'agent d'adsorption de SO₂ n'ayant par réagi, étant extraites de la chambre de combustion et introduites dans un dispositif mélangeur, où le mélange de matières solides évacué de l'installation de chauffage à lit fluidisé circulant et introduit dans le dispositif mélangeur, mélange constitué de cendre, d'un produit de réaction et d'agent d'adsorption de SO₂ n'ayant pas réagi, issu d'un filtre de gaz de fumée sous forme de cendre de filtre et de la chambre de combustion sous forme de cendre de fond ou cendre grossière, est introduit dans le dispositif mélangeur à chaque fois par l'intermédiaire de conduites séparées, de la cendre de filtre ou de la cendre de fond ou un mélange ajustable des deux étant introduits dans le dispositif mélangeur,
dans le dispositif mélangeur, de l'eau ou une solution aqueuse sodique étant introduites dans la cendre, le produit de réaction et l'agent d'adsorption de SO₂ n'ayant pas réagi, et mélangées à ceux-ci, et l'agent d'adsorption de SO₂ n'ayant pas réagi étant alors transformé en un produit d'hydratation à une température de réaction de 60 à 100°C et à la pression atmosphérique, le dispositif mélangeur étant formé en deux étages, dans le premier étage une quantité partielle de l'eau ou de la solution aqueuse sodique nécessaire au mélange étant mélangée à la cendre, au produit de réaction ou à l'agent d'adsorption de SO₂ n'ayant pas réagi, et dans le deuxième étage, la quantité partielle restante de l'eau ou de la solution aqueuse sodique étant mélangée de façon régulée en fonction de l'humidité résiduelle du produit à extraire du dispositif mélangeur, la cendre conjointement avec le produit de réaction et le produit d'hydratation issus du dispositif mélangeur étant recyclée dans la chambre de combustion de l'installation de chauffage à lit fluidisé,
et le produit d'hydratation étant réactivé en un agent d'adsorption de SO₂ à une température de chambre de combustion de 700° à 950°C.

2. Procédé selon la revendication 1, **caractérisé en ce que** le dispositif mélangeur comprend une amenée supplémentaire d'eau ou d'une solution aqueuse sodique, à l'aide de laquelle de l'eau ou une solution aqueuse sodique sont introduites dans la cendre, le produit de réaction et l'agent d'adsorption de SO₂ n'ayant pas réagi, en amont du dispositif mélangeur.

3. Procédé selon la revendication 1 ou 2, **caractérisé en ce que** la température de réaction du dispositif mélangeur est régulée.

4. Procédé selon la revendication 3, **caractérisé en ce que**, pour réguler la température de réaction, l'eau ou la solution aqueuse sodique introduites dans le dispositif mélangeur, sont préchauffées conformément à la température de réaction exigée.

5. Procédé selon l'une quelconque des revendications précédentes, **caractérisé en ce que** la durée de séjour des produits introduits dans le dispositif mélangeur est régulée en fonction du degré d'hydratation du produit à extraire.

6. Procédé selon l'une quelconque des revendications précédentes, **caractérisé en ce que** la durée de séjour minimale des produits introduits dans le dispositif mélangeur est de 1 minute dans le dispositif mélangeur et/ou les conduites de refoulement suivantes.

7. Procédé selon l'une quelconque des revendications précédentes, **caractérisé en ce que** la cendre extraite du dispositif mélangeur, le produit de réaction et le produit d'hydratation existent sous forme de matière solide et présentent une humidité résiduelle inférieure à 10%.

8. Procédé selon l'une quelconque des revendications précédentes, **caractérisé en ce que** la cendre extraite du dispositif mélangeur, le produit de réaction et le produit d'hydratation sont introduits dans un sécheur et sont séchés en obtenant un produit susceptible d'être entreposé.

9. Procédé selon l'une quelconque des revendications précédentes, **caractérisé en ce que** la cendre extraite du dispositif mélangeur, le produit de réaction et le produit d'hydratation sont entreposés dans un réservoir intermédiaire et introduits dans la chambre de combustion à lit fluidisé à des instants séparés dans le temps.

10. Procédé selon l'une quelconque des revendications précédentes, **caractérisé en ce qu'**au moins une partie de la cendre extraite du dispositif mélangeur, du produit de réaction et du produit d'hydratation, est à nouveau introduite dans le dispositif mélangeur.

11. Procédé selon l'une quelconque des revendications précédentes, **caractérisé en ce que** la cendre, le produit de réaction et l'agent d'adsorption de SO₂ sont tamisés et/ou triés avant l'introduction dans le dispositif mélangeur.

12. Procédé selon l'une quelconque des revendications précédentes, **caractérisé en ce que** la cendre, le produit de réaction et l'agent d'adsorption de SO₂ n'ayant pas réagi sont broyés avant l'introduction dans le dispositif mélangeur.

13. Procédé selon l'une quelconque des revendications précédentes, **caractérisé en ce que** la répartition de mélange de la cendre de filtre et de la cendre de fond est ajustée en adaptant la granulométrie du combustible ajouté et de l'agent d'adsorption de SO₂.

14. Procédé selon l'une quelconque des revendications précédentes, **caractérisé en ce que** l'eau ou la solution aqueuse sodique sont introduites dans le dispositif mélangeur à travers au moins une buse.

15. Procédé selon l'une quelconque des revendications précédentes, **caractérisé en ce que** la teneur en agent d'adsorption de SO₂ n'ayant pas réagi dans la chambre de combustion, est de 5 à 40% en poids du mélange de matières solides extrait de la chambre de combustion.

16. Procédé selon l'une quelconque des revendications précédentes, **caractérisé en ce que** le calcaire est employé en tant qu'agent d'adsorption de SO₂.

17. Procédé selon l'une quelconque des revendications 1 à 15, **caractérisé en ce que** la dolomite est employée comme agent d'adsorption de SO₂.

18. Procédé selon l'une quelconque des revendications précédentes, **caractérisé en ce que** la solution aqueuse sodique contient du sodium sous forme d'ions dans un ordre de grandeur allant jusqu'à 3% en poids, par rapport à l'agent d'adsorption de SO₂ n'ayant pas réagi.

19. Procédé selon l'une quelconque des revendications précédentes, **caractérisé en ce qu'**au moins une partie de l'agent d'adsorption de SO₂ est chargé directement dans le dispositif mélangeur.

20. Procédé selon l'une quelconque des revendications précédentes, **caractérisé en ce que** Ca(OH)₂ est chargé dans la conduite entre le dispositif mélangeur et la chambre de combustion.

21. Procédé selon la revendication 20, **caractérisé en ce que** Ca(OH)₂ est chargé dans la direction du courant du produit s'écoulant dans la conduite entre le dispositif mélangeur et la chambre de combustion, vu en amont d'un réservoir intermédiaire.

22. Procédé selon l'une quelconque des revendications précédentes, **caractérisé en ce que** 50 à 500% en poids du mélange de matières solides, par rapport au mélange de matières solides quittant couramment la chambre de combustion de l'installation de chauffe à lit fluidisé, sont introduits dans le dispositif mélangeur en vue d'une hydratation, puis à nouveau dans la chambre de combustion.

23. Dispositif pour réaliser le procédé selon au moins l'une des revendications précédentes, comprenant
une chambre de combustion (2), dans laquelle du charbon contenant du soufre est brûlé avec apport d'air dans un lit fluidisé,
des moyens pour extraire une partie des produits formés lors de la combustion sortant de la chambre de combustion (2) et pour l'introduire dans un dispositif de mélange mécanique (12), qui est formé avec deux étages, et qui est alimenté par de l'eau ou une solution aqueuse sodique, la cendre de filtre et la cendre de fond ou la cendre grossière du dispositif mélangeur (12) y étant introduites à chaque fois par des amenées séparées,
des moyens pour extraire les produits à partir du dispositif mélangeur (12) et pour les recycler dans la chambre de combustion (2).

24. Dispositif selon la revendication 23, **caractérisé en ce que** de l'eau ou une solution aqueuse sodique peuvent être introduites dans la cendre, le produit de réaction et l'agent d'adsorption de SO₂ n'ayant pas réagi, au moyen de l'introduction (14) d'eau ou d'une solution aqueuse sodique en amont du dispositif mélangeur (12).

25. Dispositif selon la revendication 23 ou 24, **caractérisé en ce que**, dans la direction du courant ou du transport de l'agent d'adsorption de SO₂ n'ayant pas réagi, vu en amont du dispositif mélangeur (12), un dispositif de tamisage ou de triage (17) est prévu pour tamiser ou trier la cendre, le produit de réaction et l'agent d'adsorption de SO₂ n'ayant pas réagi.

26. Dispositif selon l'une quelconque des revendications 23 à 25, **caractérisé en ce que**, dans la direction d'écoulement ou de transport de l'agent d'adsorption de SO₂ n'ayant pas réagi, vu en amont du dispositif mélangeur (12), un dispositif de broyage (18) est prévu pour broyer la cendre, le produit de réaction et l'agent d'adsorption de SO₂ n'ayant pas réagi.

27. Dispositif selon l'une quelconque des revendications 23 à 26, **caractérisé en ce que**, dans la direction d'écoulement ou de transport du produit d'hydratation, vu en amont du dispositif mélangeur (12), un dispositif de séchage (20) est prévu pour sécher la cendre, le produit de réaction et le produit d'hydratation.

28. Dispositif selon l'une quelconque des revendications 23 à 27, **caractérisé en ce que**, dans la direction d'écoulement ou de transport du produit d'hydratation, vu entre le dispositif mélangeur (12) et la chambre de combustion (2), un réservoir intermédiaire (21) est disposé pour stocker les cendres, le produit de réaction et le produit d'hydratation.

29. Dispositif selon l'une quelconque des revendications 23 à 28, **caractérisé en ce que** le dispositif mélangeur (12) est formé avec au moins une buse (23) pour introduire de l'eau ou une solution aqueuse sodique.

30. Dispositif selon l'une quelconque des revendications 23 à 29, **caractérisé en ce que**, le dispositif mélangeur (12) est formé en tant que mélangeur à soc ou mélangeur à aube ou agitateur.
